# EUROPÄISCHE PATENTSCHRIFT

(11) **EP 1 125 696 B1**
(45) Veröffentlichungstag und Bekanntmachung des Hinweises auf die Patenterteilung: **15.03.2006**
(21) Anmeldenummer: 01100966.9
(22) Anmeldetag: 17.01.2001
(51) Int. Cl.: B25J 19/00

(54) **Vorrichtung zum Gewichtsausgleich eines Roboterarms**
Weight balancing device for a robot arm
Dispositif d'équilibrage du poids d'un bras de robot

(30) Priorität: 17.02.2000 DE 10007251
(43) Veröffentlichungstag der Anmeldung: 22.08.2001
(73) Patentinhaber: KUKA Roboter GmbH, 86165 Augsburg (DE)
(72) Erfinder: Bayer, Albert, 86154 Augsburg (DE); Bohlken, Wolfgang, 86316 Friedberg (DE); Berninger, Alwin, 86153 Augsburg (DE)
(74) Vertreter: Lempert, Jost

(56) Entgegenhaltungen:
- EP-A- 0 947 296
- DE-C- 19 801 229
- PATENT ABSTRACTS OF JAPAN vol. 15, no. 203 (M-1116), 24. Mai 1991 (1991-05-24) -& JP 03 055192 A (TOKICO LTD), 8. März 1991 (1991-03-08)

## Beschreibung

Die Erfindung betrifft eine Vorrichtung zum Gewichtsausgleichs eines Roboterarms nach dem Oberbegriff des Anspruchs 1.

Zur Kompensation statischer Lasten weist ein Roboter in der Regel mindestens eine Vorrichtung zum Gewichtsausgleich auf, die beispielsweise als Federzylinder oder Fluidfeder, insbesondere Gasfeder, ausgebildet ist. Bei mehrachsigen Industrierobotern, die ein auf einem Gestell angeordnetes, um eine Grundachse (Al-Achse) schwenkbares Karussell und einen auf dem Karussell an einer Schwinge angeordneten, um mehrere Achsen eigentlichen verschwenkbaren Roboterarm aufweisen, sind solche Vorrichtungen insbesondere zwischen der Schwinge und dem Karussell vorgesehen, um die Lastmomente der A2-Achse aufzunehmen. Sie sind z.B. derart an der Schwinge oder am Roboterarm befestigt, daß sie bei Auslenkung der Schwinge bzw. des Roboterarms komprimiert bzw. gestreckt werden und somit den von der Auslenkung des Roboterarms abhängigen Druck in eine von dieser Auslenkung abhängige Kraft zur Kompensation der auf die Schwinge bzw. den Roboterarm ausgeübten Schwerkraft bzw. des hierdurch bedingten Drehmoments umsetzen.

Beim Einsatz von Gasfedern ist nachteilig, daß die Beziehung zwischen Auslenkung und Kraft der Gasfeder nur dann proportional ist, solange das Verhalten des Gases angenähert der idealen Gasgleichung entspricht. Da sich insbesondere bei höheren Gasdrücken das Gas nicht mehr ideal verhält und sich bei der Kompression erwärmt bzw. bei der Depression abkühlt und sich umgekehrt auch der Gasdruck bei Temperaturänderungen verändert, weist die mittels Gasfedern erzeugte Kraft eine erhebliche Schwankungsbreite auf, was zu einer schwankenden Lastkompensation aufgrund von Temperaturänderungen führt, die durch Regelvorgänge kompensiert werden müssen. Ferner führen Leckagen der Gasfedern zu einem Versagen des Gewichtsausgleichs, was zum Ansprechen von Überwachungseinrichtungen und darausfolgend Abschaltung des Roboters und Anlagenstillstand führt und in einer Überlastung und Schädigung des Roboters resultieren kann.

Der Nachteil von Federzylindern besteht hingegen insbesondere darin, daß diese eine im wesentlichen unveränderbare Federkonstante aufweisen und somit nicht flexibel einsetzbar sind. Werden an die Kompensationskraft des Gewichtsausgleichs eines Roboters unterschiedliche Anforderungen gestellt - sei es bei einer Umrüstung auf andere Traglast oder bei Änderung der Bewegungsverhältnisse des Roboters - so muß der Federzylinder ausgetauscht werden, was aufwendig und teuer ist und eine Lagerhaltung mehrerer Federzylinder mit unterschiedlichen Federkonstanten erfordert.

Die EP 947 296 A2 zeigt eine Gewichtsausgleichsvorrichtung, deren Zylinder ein topfförmiges Gehäuse aufweist, das einseitig an seiner einen Stirnseite durch einen von der Kolbenstange durchsetzten Deckel lösbar verschlossen ist. Die Federn im Zylinder finden einerseits an diesem Deckel ihr Widerlager; zum anderen finden sie ihr Widerlager an einem mit dem der anderen Stirnseite des Zylinders zugewandten Ende des Kolbens verbundenen Teller. Zum Auswechseln von Federn, und sei es auch nur einer Feder, was üblicherweise zur Anpassung der Zylinderkraft an einem speziellen Roboter der Fall ist, muss der Deckel gelöst werden, wobei die Federkraft sämtliche Federn sanft aufgenommen werden muss, damit diese den Deckel nicht absprengen. Zum Verschließen ist wiederum die Federkraft sämtlicher Federn zu überwinden, auch wenn nur eine ausgewechselt wurde.

Da darüber hinaus der durch die Kolbenstange durchsetzte Deckel des Zylinders zum Auswechseln von Federn entfernt werden muss, bedeutet dies zunächst, dass die gesamte Gewichtsausgleichsvorrichtung aus dem Roboter auszubauen ist, also von Roboterarm bzw. Schwinge gelöst werden müssen, was mit zusätzlichem Aufwand verbunden ist und ein leichtes Einsetzen und Entfernen einer Feder ausschließt.

Ausgehend von diesem Stand der Technik stellt sich die Erfindung die Aufgabe, eine Vorrichtung zum Gewichtsausgleich eines Roboterarms eines Roboters der gattungsgemäßen Art dahingehend weiterzubilden, dass sie leichter an die für einen Roboter erforderlichen Kompensationskräfte anpassbar ist.

Erfindungsgemäß wird diese Aufgabe mit einer Vorrichtung der eingangs genannten Art gelöst, welche die kennzeichnenden Merkmale des Anspruchs 1 aufweisen.

Durch die erfindungsgemäße Ausgestaltung ist die Vorrichtung zum Gewichtsausgleich universell einsetzbar, indem je nach der erforderlichen Kompensationskraft des Gewichtsausgleichs die auswechselbare Schraubenfeder entfernt wird oder Schraubenfedern mit unterschiedlichen Federkonstanten in den Federzylinder eingesetzt werden. Anstelle des gesamten Federzylinders müssen lediglich die auswechselbaren Schraubenfeder eingesetzt, entfernt oder gegeneinander ausgetauscht werden, wobei insbesondere eine Demontage des Federzylinders von dem Roboter nicht erforderlich ist, sondern der den Gewichtsausgleich aufweisende Roboterarm z.B. gesichert und die Schraubenfeder am montierten Federzylinder getauscht wird. Die erfindungsgemäße Vorrichtung zum Gewichtsausgleich ist somit für verschiedene Roboter mit unterschiedlichen Bewegungsverhältnissen und Lastzuständen geeignet und macht eine Lagerhaltung von Federzylindern mit verschiedenen Federkonstanten entbehrlich.

Wesentlich ist dabei die Einsetzbarkeit und Austauschbarkeit der zusätzlichen Schraubenfeder ohne Demontage bzw.

Abbau des Federzylinders vom Roboter. Ein Roboter kann somit in seiner Arbeitszelle ohne weiteres auf andere Traglasten umgestellt werden, was gegenüber den bisherigen Möglichkeiten mit einer erheblichen Zeitersparnis verbunden ist.

Während der Federzylinder grundsätzlich eine fest eingebaute Schraubenfeder aufweisen kann, hat er in bevorzugter Ausführung deren zwei sowie eine auswechselbare Schraubenfeder, so daß sowohl die fest eingebauten Schraubenfedern als auch die auswechselbare Schraubenfeder zur Gesamtfederkonstanten des Gewichtsausgleichs beitragen. Sofern die fest eingebauten und die auswechselbare Schraubenfedern insbesondere parallel angeordnet sind, so ergibt sich als Gesamtfederkonstante des Federzylinders die Summe der Federkonstanten der fest eingebauten und der auswechselbaren Schraubenfedern. Es können selbstverständlich auch mehr als zwei fest eingebaute Schraubenfedern und mehr als eine auswechselbare Schraubenfeder vorgesehen sein, die zum Erhalt einer hohen Federkonstanten parallel geschaltet sind.

Aus Gründen der Kompaktheit sind die Schraubenfedern vorzugsweise im wesentlichen konzentrisch angeordnet, wobei die auswechselbare Schraubenfeder bevorzugt zentral angeordnet ist. Die Bohrung ist vorzugsweise zentral in einem Deckel des Zylinders ausgebildet. Die Bohrung weist bevorzugt eine Abdeckung auf, durch die insbesondere ein Berührungsschutz gegeben ist, die aber auch einen weitgehend staubund feuchtigkeitsdichten Verschluß bilden kann.

In weiterhin bevorzugter Ausführung ist vorgesehen, daß der Innenteller mit einem ein Widerlager für die fest eingebauten Schraubenfedern bildenden Außenteller lösbar verbunden ist, wobei insbesondere der Außendurchmesser des Außentellers größer als der Durchmesser der zentralen Bohrung im Deckel des Federzylinders ist. Derart kann zum Austausch der auswechselbaren Schraubenfeder der Innenteller vom Außenteller gelöst und zusammen mit der auswechselbaren Schraubenfeder durch die Bohrung im Deckel des Federzylinders entfernt werden, während der Außenteller aufgrund seines den Durchmesser der Bohrung übertreffenden Durchmessers die fest eingebauten Schraubenfedern im Federzylinder zurückhält.

Eine bevorzugte Ausführung sieht vor, daß eine Vorspannung zumindest der auswechselbaren Schraubenfeder einstellbar ist, um somit die gewünschte Gesamtfederkonstante des Federzylinders zu variieren. Hierzu ist insbesondere eine an der Kolbenstange des Federzylinders angeordnete Spindel zum Einstellen der der gewünschten Vorspannung entsprechenden Länge der auswechselbaren Schraubenfeder vorgesehen, an der insbesondere der ein Widerlager für die auswechselbare Schraubenfeder bildende Innenteller, z.B. mittels einer Mutter, axial verschiebbar festgelegt ist.

Weiterhin bevorzugt ist auch eine Vorspannung zumindest einer weiteren, fest eingebauten Schraubenfeder einstellbar, wobei die der gewünschten Vorspannung entsprechende Länge der fest eingebauten Schraubenfeder beispielsweise gemeinsam mit der der gewünschten Vorspannung entsprechenden Länge der auswechselbaren Schraubenfeder mittels der Spindel einstellbar ist, was insbesondere durch die lösbare Verbindung zwischen Innen- und Außenteller gewährleistet sein kann.

Um einen einfachen und sicheren Austausch einer in den Federzylinder einzusetzenden, auswechselbaren Schraubenfeder mit einer die der gewünschten Vorspannung entsprechenden Länge übertreffenden Länge zu gewährleisten, ist in bevorzugter Ausführung eine auf die Kolbenstange des Federzylinders aufsetzbare Montagespindel zum Komprimieren einer solchen auswechselbaren Schraubenfeder während des Einsetzens in den Federzylinder vorgesehen. Bevorzugt ist die Montagespindel auf die dem Federzylinder abgewandte Stirnseite der Spindel koaxial und fluchtend aufsetzbar, um insbesondere beim Einbau einer auswechselbaren Schraubenfeder den Innenteller über die Montagespindel auf die Spindel des Federzylinders aufzusetzen und dort festzulegen.

Um eine einwandfreie Funktion der erfindungsgemäßen Vorrichtung sicherzustellen, sind vorzugsweise Zentriereinrichtungen zur konzentrischen Anordnung der Schraubenfedern in dem Federzylinder vorgesehen, wobei einerseits ein zumindest die auswechselbare Schraubenfeder bezüglich einer benachbarten, fest eingebauten Schraubenfeder konzentrisch führender Zentrierzylinder, der einen Kontakt der auswechselbaren Schraubenfeder mit der benachbarten, fest eingebauten Schraubenfeder verhindert, andererseits ein zumindest eine innere bezüglich einer äußeren, fest eingebauten Schraubenfeder konzentrisch führender Zentrierring vorgesehen ist. Ferner weist der Innenteller bevorzugt einen in die auswechselbare Schraubenfeder eingreifenden Zentrieransatz und - sofern wenigstens zwei fest eingebaute Schraubenfedern vorgesehen sind - der Außenteller einen eine innere bezüglich einer äußeren, fest eingebauten Schraubenfeder konzentrisch führenden Zentrierbund auf.

Im übrigen betrifft die Erfindung auch einen Roboter, insbesondere einen mehrachsigen Industrieroboter, der mit einer solchen Vorrichtung zum Gewichtsausgleich ausgestattet ist.

Nachstehend ist die Erfindung anhand einer bevorzugten Ausführung unter Bezugnahme auf die Zeichnungen näher erläutert. Dabei zeigen:
- Fig. 1: einen Längsschnitt I-I gemäß Fig. 3 durch einen Federzylinder einer Ausführungsform einer erfindungsgemäßen Vorrichtung;
- Fig. 2: einen Längsschnitt durch den Federzylinder gemäß Fig. 1 während des Einsetzens der auswechselbaren Schraubenfeder und
- Fig. 3: eine perspektivische Ansicht des Federzylinders gemäß Fig. 1.

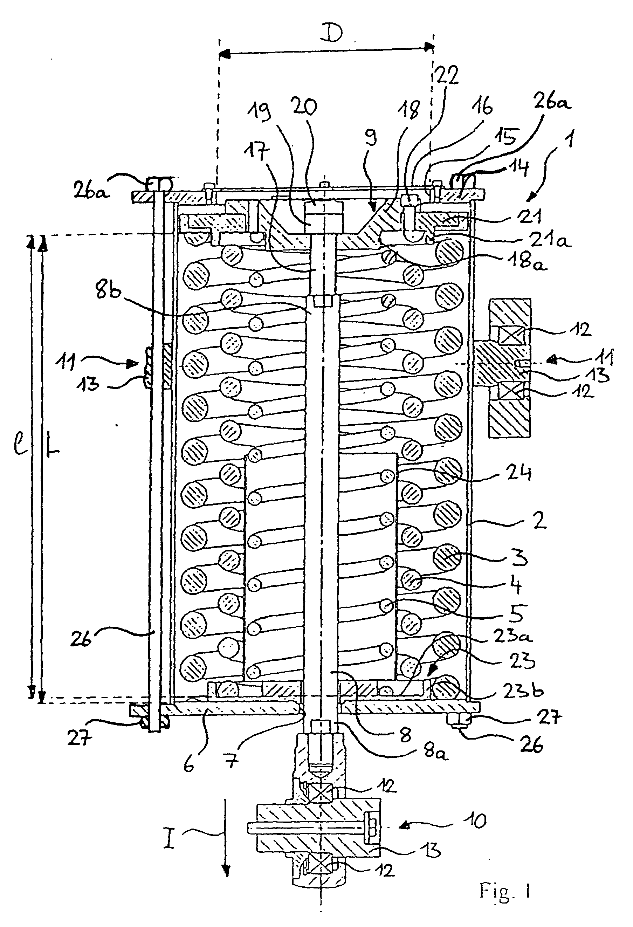

In Fig. 1 ist eine erfindungsgemäße Vorrichtung zum Gewichtsausgleich eines Roboterarms dargestellt, welche einen Federzylinder 1 mit in einem Gehäuse 2 konzentrisch angeordneten Schraubenfedern 3, 4, 5 aufweist, die z.B. unterschiedliche Federkonstanten haben können. Die Gesamtfederkonstante des Federzylinders 1 entspricht aufgrund der Parallelanordnung der Schraubenfedern 3, 4, 5 der Summe ihrer Federkonstanten. Während es sich bei den Schraubenfedern 3, 4 um fest eingebaute Schraubenfedern handelt, ist die zentrale Schraubenfeder 5 auswechselbar. Als Widerlager für die Schraubenfeder 3, 4, 5 dienen einerseits ein Boden 6 des Gehäuses 2 des Federzylinders 1, andererseits ein mit einer eine zentrale Bohrung 7 im Boden 6 des Gehäuses 1 durchsetzenden Kolbenstange 8 verbundener Teller 9. Auf diese Weise werden bei einem Herausziehen der Kolbenstange 8 aus dem Gehäuse 2 in Richtung des Pfeils I die Schraubenfedern 3, 4, 5 komprimiert und bei einer Bewegung der Kolbenstange 8 in die entgegengesetzte Richtung entspannt, wobei die zum Herausziehen erforderliche Kraft proportional zum Auszugsweg ist und der Proportionalitätsfaktor der Gesamtfederkonstanten des Federzylinders 1 entspricht.

Um den Federzylinder 1 an relativ zueinander beweglichen Teilen eines Roboters, z.B. zwischen einem Roboterarm und einem Karussell (nicht gezeigt), festzulegen, ist an dem dem Federzylinder 1 abgewandten Ende 8a der Kolbenstange 8 eine Befestigungseinrichtung 10 und am Gehäuse 2 des Federzylinders 1 eine Befestigungseinrichtung 11 vorgesehen, die in der gezeigten Ausführung jeweils einen mittels Rollenlagern 12 gelagerten Lagerbock 13 aufweisen und von denen die in der Zeichnung linke Befestigungseinrichtung 11 abgebrochen dargestellt ist.

Die dem Boden 6 gegenüberliegende Stirnseite des Federzylinders 1 ist von einem Deckel 14 verschlossen, der zur Gewährleistung eines leichten Austauschs der Schraubenfeder 5 eine zentrale Bohrung 15 aufweist. Die Bohrung 15 ist mittels einer Abdeckung 16 staub- und feuchtigkeitsdicht verschlossen. Der Boden 6 und der Deckel 14 sind mittels sie durchsetzenden, außenseitig des Gehäuses 2 angeordneten Spannschrauben 26 fixiert. Ein Kopf 26a und eine Mutter 27 einer jeden Spannschraube 26 verspannen dabei den Deckel 14 des Federzylinders 1 gegen den Boden 6.

An das innerhalb des Federzylinders 1 angeordnete Ende 8b der Kolbenstange 8 schließt sich eine Spindel 17 an, an der ein als Widerlager für die auswechselbare Schraubenfeder 5 dienender Innenteller 18 des Tellers 9 mittels einer Mutter 19 festgelegt ist. Letztere ist durch eine Kontermutter 20 gesichert. Durch axiales Verschieben des Innentellers 18 entlang der Spindel 17 ist die der gewünschten Vorspannung entsprechende Länge 1 der auswechselbaren Schraubenfeder 5 einstellbar. An dem Innenteller 18 ist ein als Widerlager für die fest eingebauten Schraubenfedern 3, 4 dienender Außenteller 21 mittels Schrauben 22 mit dem Innenteller 18 lösbar verbunden. Während der Außendurchmesser des Außentellers 21 den Durchmesser D der Bohrung 15 im Deckel 14 des Federzylinders 1 übertrifft, ist der Außendurchmesser des Innentellers 18 kleiner als der Durchmesser D der Bohrung 15, so daß der Innenteller 18 dem Federzylinder 1 durch die Bohrung 15 entnehmbar ist. Durch die lösbare Verbindung des Außentellers 21 mit dem Innenteller 18 wird somit einerseits ein leichtes Entfernen der auswechselbaren Schraubenfeder 5 durch die zentrale Bohrung 15 im Deckel 14 des Gehäuses 2 ermöglicht, andererseits ist auf diese Weise die der gewünschten Vorspannung entsprechende Länge L der fest eingebauten Schraubenfedern 3, 4 gemeinsam mit der der gewünschten Vorspannung entsprechenden Länge 1 der auswechselbaren Schraubenfeder 5 mittels der Spindel 17 einstellbar.

Zur konzentrischen Anordnung der Schraubenfedern 3, 4, 5 sind ferner Zentriereinrichtungen vorgesehen, die in der gezeigten Ausführung einen am Boden 6 des Gehäuses 2 angeordneten Zentrierring 23 mit einer die auswechselbare Schraubenfeder 5 und die fest eingebaute innere Schraubenfeder 4 aufnehmenden Ringnut 23a und einem die fest eingebaute innere Schraubenfeder 4 von der fest eingebauten äußeren Schraubenfeder 3 trennenden, umfangsseitigen Bund 23b umfassen. Weiterhin sind ein am Innenteller 18 ausgeformter, in die auswechselbare Schraubenfeder 5 eingreifender Zentrieransatz 18a, ein am Außenteller 21 ausgeformter, die fest eingebaute innere 4 von der äußeren Schraubenfeder 3 trennender Zentrierbund 21a und ein die auswechselbare Schraubenfeder 5 konzentrisch innerhalb der fest eingebauten inneren Schraubenfeder 4 führender Zentrierzylinder 24 vorgesehen.

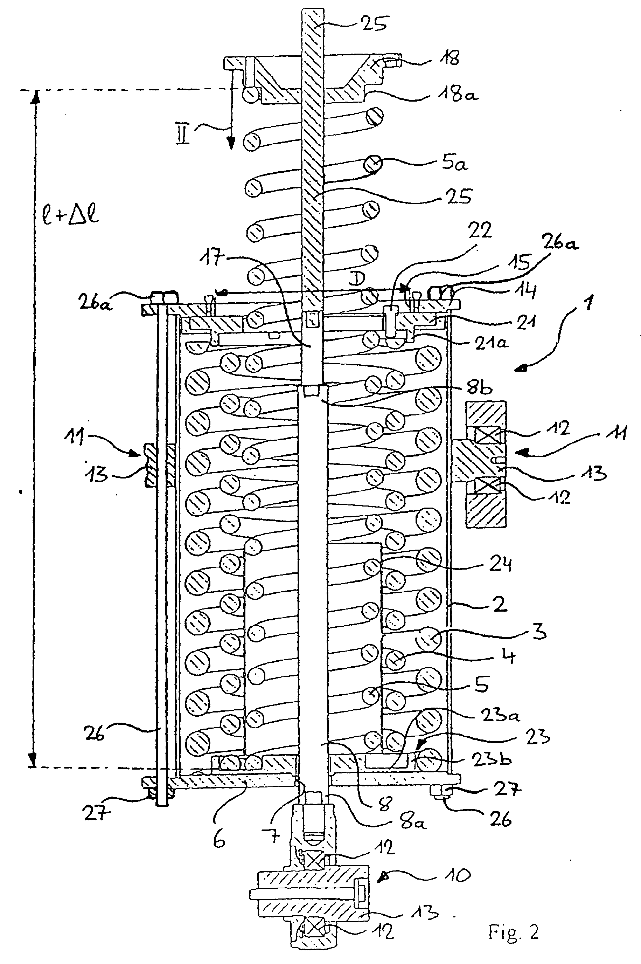

Zum Entfernen der auswechselbaren Schraubenfeder 5 werden die Teile des Roboters (nicht dargestellt), an denen der Federzylinder 1 festgelegt ist, gegeneinander gesichert und die Abdeckung 16 vom Deckel 15 des Gehäuses 2 abgenommen. Sodann werden die Kontermutter 20 und die Mutter 19 von der Spindel 17 gelöst, so daß - sofern wenigstens eine der Schraubenfedern 3, 4, 5 unter Vorspannung steht - der Außenteller 21 des das Widerlager für die Schraubenfedern 3, 4, 5 bildenden Tellers 9 an der Innenseite des Deckels 14 zur Anlage kommt (Fig. 2). Anschließend wird der Innenteller 18 des Tellers 9 durch Lösen der Schrauben 22 vom Außenteller 21 entfernt, die Montagespindel 25 auf die Spindel 17 aufgebracht und die Schraubenfeder 5 mittels der Spindel 17 entspannt, so daß sie schließlich über die Bohrung 15 im Deckel 14 des Gehäuses 2 entnommen werden kann.

Sofern ein Einsatz des lediglich mit den beiden fest eingebauten Schraubenfedern 3, 4 bestückten Federzylinders 1 vorgesehen ist, so wird der Innenteller 18 wieder am Außenteller 21 verschraubt und durch Verschieben des Tellers 9 entlang der Spindel 17 mittels der Mutter 19 die gewünschte Vorspannung der Schraubenfedern 3, 4 eingestellt (Fig. 1). Anschließend wird die Mutter 19 mit der Kontermutter 20 gesichert und die Bohrung 15 im Deckel 14 mittels der Abdeckung 16 verschlossen.

Soll die dem Federzylinder 1 entnommene Schraubenfeder 5 durch eine andere Schraubenfeder 5a mit anderer Federkonstanten ersetzt werden und handelt es sich bei der einzusetzenden Schraubenfeder 5a insbesondere um eine Feder, die im unbelasteten Zustand eine die der gewünschten Vorspannung entsprechenden Länge 1 (Fig. 1) übertreffende Länge 1 + Δl (Fig. 2) aufweist, so ist eine Montagespindel 25 (Fig. 2) vorgesehen, die an der Stirnseite der Spindel 17 koaxial und fluchtend aufgesetzt, z.B. verschraubt wird. Nach Einlegen der Schraubenfeder 5a in das Gehäuse 2 des Federzylinders 1 wird der Innenteller 18 auf die Montagespindel 25 aufgesetzt und z.B. mittels einer Flügelmutter (nicht gezeigt) unter Komprimieren der Feder 5a entlang der Montagespindel 25 in Richtung Pfeil II bewegt, bis der Innenteller 18 an dem an der Innenseite des Deckels 14 anliegenden Außenteller 21 mittels der Schrauben 22 fixiert werden kann. Sodann wird die Montagespindel 25 entfernt, der Innenteller 18 mit dem Außenteller 21 unter der gewünschten Vorspannung aller Federn 3, 4, 5a mittels der Mutter 19 an der Spindel 17 festgelegt (Fig. 1) und die Mutter 19 in der gewünschten Position durch die Kontermutter 20 gesichert. Anschließend wird die Bohrung 15 im Deckel 14 des Gehäuses 2 mittels der Abdeckung 16 verschlossen. Die Gesamtfederkonstante des Federzylinders 1 beträgt nun die Summe der Federkonstanten aller Schraubenfedern 3, 4, 5a.

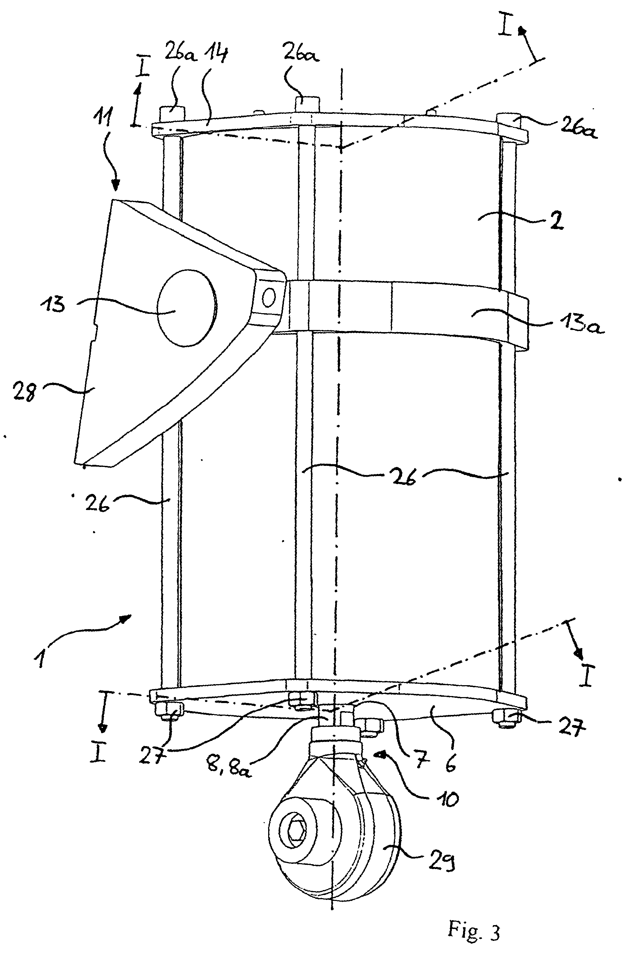

Wie aus Fig. 3 ersichtlich, ist der Boden 6 des Federzylinders 1 gegen den Deckel 14 mittels vier außenseitig des Gehäuses 2 angeordneten Spannschrauben 26 verspannt. Ein am Umfang des Gehäuses 2 festgelegter Haltering 13a dient zur Aufnahme der Lagerböcke 13 der Befestigungseinrichtungen 11 sowie jeweils einer Halteinrichtung 28 zum Befestigen des Federzylinders 1 an einem Teil eines Roboters, z.B. an einem Karussell. Zum Festlegen des Federzylinders 1 an einem relativ zu diesem Teil des Roboters beweglichen Roboterteil, z.B. einem Roboterarm, ist an der an der den Boden 6 des Gehäuses 2 durchsetzenden Kolbenstange 8 angeordneten Befestigungseinrichtung 10 eine weitere Halteeinrichtung 29 vorgesehen.

### Bezugszeichenliste

- 1: Federzylinder
- 2: Gehäuse
- 3: fest eingebaute Schraubenfeder
- 4: fest eingebaute Schraubenfeder
- 5, 5a: auswechselbare Schraubenfeder
- 6: Boden des Gehäuses
- 7: Bohrung
- 8: Kolbenstange
- 8a: dem Federzylinder abgewandtes Ende der Kolbenstange
- 8b: dem Federzylinder zugewandtes Ende der Kolbenstange
- 9: Teller
- 10: Befestigungseinrichtung
- 11: Befestigungsentrichtung
- 12: Rollenlager
- 13: Lagerbock
- 13a: Haltering
- 14: Deckel des Gehäuses
- 15: zentrale Bohrung
- 16: Abdeckung
- 17: Spindel
- 18: Innenteller
- 18a: Zentrieransatz
- 19: Mutter
- 20: Kontermutter
- 21: Außenteller
- 21a: Zentrierbund
- 22: Schraube
- 23: Zentrierring
- 23a: Ringnut
- 23b: Bund
- 24: Zentrierzylinder
- 25: Montagespindel
- 26: Spannschraube
- 26a: Kopf der Spannschraube
- 27: Mutter
- 28: Halteeinrichtung
- 29: Halteeinrichtung .
- I: Richtungspfeil
- II: Richtungspfeil
- l: Länge der vorbelasteten auswechselbaren Schraubenfeder
- l+Δl: Länge der entspannten auswechselbaren Schraubenfeder
- L: Länge der fest eingebauten Schraubenfeder
- D: Durchmesser der zentralen Bohrung

## Patentansprüche

1. Vorrichtung zum Gewichtsausgleich eines Roboterarms eines Roboters, mit einem Federzylinder mit mindestens zwei Schraubenfedern, wobei die der Kolbenaustrittsseite abgewandte Stirnseite des Zylinders (1) eine verschließbare Bohrung (15) aufweist, **gekennzeichnet durch** einen mit einer Kolbenstange (8) des Federzylinders verbundenen Innenteller (18), der als Widerlager für mindestens eine auswechselbare Schraubenfeder (5) des Federzylinders (1) wirkt und dessen Außenabmessungen zum leichten Einsetzen und Entfernen der wenigstens einen auswechselbaren schraubenfeder kleiner als die Abmessungen der Bohrung (15) sind.

2. Vorrichtung nach Anspruch 1, **dadurch gekennzeichnet, daß** zwei fest eingebaute Schraubenfedern (3, 4) und eine auswechselbare Schraubenfeder (5) vorgesehen sind.

3. Vorrichtung nach Anspruch 1 oder 2, **dadurch gekennzeichnet, daß** die Schraubenfedern (3, 4, 5) im wesentlichen konzentrisch angeordnet sind.

4. Vorrichtung nach Anspruch 3, **dadurch gekennzeichnet, daß** die auswechselbare Schraubenfeder (5) zentral angeordnet ist.

5. Vorrichtung nach einem der Ansprüche 1 bis 4, **dadurch gekennzeichnet, daß** die Bohrung (15) in einem Deckel (14) ausgebildet ist.

6. Vorrichtung nach Anspruch 5, **dadurch gekennzeichnet, daß** die Bohrung (15) eine Abdeckung (16) aufweist,

7. Vorrichtung nach einem der Ansprüche 1 bis 6, **dadurch gekennzeichnet, daß** der Innenteller (18) mit einem ein Widerlager für die fest eingebauten Schraubenfedern (3, 4) bildenden Außenteller (21) lösbar verbunden ist.

8. Vorrichtung nach Anspruch 7, **dadurch gekennzeichnet, daß** der Außendurchmesser des Außenteilers (21) größer als der Durchmesser (D) der zentralen Bohrung (15) im Deckel (14) des Federzylinders (1) ist.

9. Vorrichtung nach einem der Ansprüche 1 bis 8, **dadurch gekennzeichnet, daß** eine Vorspannung zumindest der auswechselbaren Schraubenfeder (5) einstellbar ist.

10. Vorrichtung nach Anspruch 9, **dadurch gekennzeichnet, daß** eine an der Kolbenstange (8) des Federzylinders (1) angeordnete Spindel (17) zum Einstellen der der gewünschten Vorspannung entsprechenden Länge (1) der auswechselbaren Schraubenfeder (5) vorgesehen ist.

11. Vorrichtung nach Anspruch 10, **dadurch gekennzeichnet, daß** der ein Widerlager für die auswechselbare Schraubenfeder (5) bildende Innenteller (18) verschiebbar an der Spindel (17) festgelegt ist.

12. Vorrichtung nach einem der Ansprüche 9 bis 11, **dadurch gekennzeichnet, daß** eine Vorspannung zumindest einer weiteren, fest eingebauten Schraubenfeder (3, 4) einstellbar ist.

13. Vorrichtung nach Anspruch 12, **dadurch gekennzeichnet, daß** die der gewünschten Vorspannung entsprechende Länge (L) der fest eingebauten Schraubenfeder (3, 4) gemeinsam mit der der gewünschten Vorspannung entsprechenden Länge (1) der auswechselbaren Schraubenfeder (5) mittels der Spindel (17) einstellbar ist.

14. Vorrichtung nach einem der Ansprüche 1 bis 13, **dadurch gekennzeichnet, daß** eine auf die Kolbenstange (8) des Federzylinders (1) aufsetzbare Montagespindel (25) zum Komprimieren einer in den Federzylinder (1) einzusetzenden, auswechselbaren Schraubenfeder (5a) mit einer die der gewünschten Vorspannung entsprechenden Länge (1) übertreffenden Länge (1 + Δl) vorgesehen ist.

15. Vorrichtung nach Anspruch 14, **dadurch gekennzeichnet, daß** die Montagespindel (25) auf die dem Federzylinder (1) abgewandten Stirnseite der Spindel (17) koaxial und fluchtend aufsetzbar ist.

16. Vorrichtung nach einem der Ansprüche 1 bis 15, **dadurch gekennzeichnet, daß** Zentriereinrichtungen (18a, 21a, 23, 24) zur konzentrischen Anordnung der Schraubenfedern (3, 4, 5) in dem Federzylinder (1) vorgesehen sind.

17. Vorrichtung nach Anspruch 16, **dadurch gekennzeichnet, daß** ein zumindest die auswechselbare Schraubenfeder (5) bezüglich einer benachbarten, fest eingebauten Schraubenfeder (4) konzentrisch führender Zentrierzylinder (24) vorgesehen ist.

18. Vorrichtung nach Anspruch 16, **dadurch gekennzeichnet, daß** ein zumindest eine innere (4) bezüglich einer äußeren, fest eingebauten Schraubenfeder (3) konzentrisch führender Zentrierring (23) vorgesehen ist.

19. Vorrichtung nach Anspruch 16, **dadurch gekennzeichnet, daß** der Innenteller (18) einen in die auswechselbare Schraubenfeder (5) eingreifenden Zentrieransatz (18a) aufweist.

20. Vorrichtung nach Anspruch 16, **dadurch gekennzeichnet, daß** der Außenteller (21) einen eine innere (4) bezüglich einer äußeren, fest eingebauten Schraubenfeder (3) konzentrisch führenden Zentrierbund (21a) aufweist.

21. Roboter, **gekennzeichnet durch** eine Vorrichtung nach einem der Ansprüche 1 bis 20.

## Claims

1. Device for the weight compensation of a robot arm, having a spring cylinder with at least two helical springs, the front face of the cylinder (1) remote from the piston exit side having a sealable hole (15), **characterized by** an inner disk (18), connected to a piston rod (8) of the spring cylinder, which acts as an abutment for at least one replaceable helical spring (5) of the spring cylinder (1) and whose external dimensions are smaller than the dimensions of the hole (15) to permit an easy insertion and removal of the at least one replaceable helical spring.

2. Device according to claim 1, **characterized in that** there are two fixed installed helical springs (3, 4) and one replaceable helical spring (5).

3. Device according to claims 1 or 2, **characterized in that** the helical springs (3, 4, 5) are arranged substantially concentrically.

4. Device according to claim 3, **characterized in that** the replaceable helical spring (5) is centrally positioned.

5. Device according to one of the claims 1 to 4, **characterized in that** the hole (15) is formed in a lid (14).

6. Device according to claim 5, **characterized in that** the hole (15) has a cover (16).

7. Device according to one of the claims 1 to 6, **characterized in that** the inner disk (18) is detachably connected to an outer disk (21) forming an abutment for the fixed installed helical springs (3, 4).

8. Device according to claim 7, **characterized in that** the external diameter of the outer disk (21) is larger than the diameter (D) of the central hole (15) in the lid (14) of spring cylinder (1).

9. Device according to one of the claims 1 to 8, **characterized in that** a bias of at least the replaceable helical spring (5) is adjustable.

10. Device according to claim 9, **characterized in that** a spindle (17) located on the piston rod (8) of spring cylinder (1) is provided for adjusting the length (1) of the replaceable helical spring (5) corresponding to the desired bias.

11. Device according to claim 10, **characterized in that** the inner disk (18) forming an abutment for the replaceable helical spring (5) is displaceably secured to the spindle (17).

12. Device according to one of the claims 9 to 11, **characterized in that** a bias of at least one further, fixed installed helical spring (3, 4) is adjustable.

13. Device according to claim 12, **characterized in that** the desired bias-corresponding length (L) of the fixed installed helical springs (3, 4) is adjustable jointly with the desired bias-corresponding length (1) of the replaceable helical spring (5) by means of the spindle (17).

14. Device according to one of the claims 1 to 13, **characterized in that** an assembly spindle (25) placeable on the piston rod (8) of the spring cylinder (1) is given a length (l + Δl) exceeding the desired bias-corresponding length (1) for compressing a replaceable helical spring (5a) to be inserted in the spring cylinder (1).

15. Device according to claim 14, **characterized in that** the assembly spindle (25) is coaxially and in aligned manner placeable on the front face of the spindle (17) remote from the spring cylinder (1).

16. Device according to one of the claims 1 to 15, **characterized in that** there are centring devices (18a, 21a, 23, 24) for the concentric arrangement of the helical springs (3, 4, 5) in spring cylinder (1).

17. Device according to claim 16, **characterized in that** there is a centring cylinder (24) at least concentrically guiding the replaceable helical spring (5) with respect to an adjacent, fixed installed helical spring (4).

18. Device according to claim 16, **characterized in that** there is a centring ring (23) concentrically guiding at least an inner helical spring (4) with respect to an outer, fixed installed helical spring (3).

19. Device according to claim 16, **characterized in that** the inner disk (18) has a centring shoulder (18a) engaging in the replaceable helical spring (5).

20. Device according to claim 16, **characterized in that** the outer disk (21) has a centring collar (21a) concentrically guiding an inner helical spring (4) relative to an outer, fixed installed helical spring (3).

21. Robot, **characterized by** a device according to one of the claims 1 to 20.

## Revendications

1. Dispositif d'équilibrage du bras d'un robot, comprenant un vérin à ressorts avec au moins deux ressorts hélicoïdaux, la face frontale du vérin (1) opposée au côté de sortie du piston présentant une ouverture (15) obturable, **caractérisée par** un disque intérieur (18) relié à la tige de piston (8) du vérin à ressorts, servant de butée à au moins un ressort hélicoïdal interchangeable (5) du vérin à ressorts (1) et dont les dimensions extérieurs sont inférieures aux dimensions de l'ouverture (15) pour faciliter la mise en place et l'enlèvement de l'au moins un ressort hélicoïdal.

2. Dispositif selon la revendication 1, **caractérisé en ce que** l'on prévoit deux ressorts hélicoïdaux (3,4) intégrés et un ressort hélicoïdal (5) interchangeable.

3. Dispositif selon la revendication 1 ou 2, **caractérisé en ce que** les ressorts hélicoïdaux (3, 4, 5) sont disposés sensiblement concentriques.

4. Dispositif selon la revendication 3, **caractérisé en ce que** le ressort hélicoïdal (5) interchangeable est disposé au centre.

5. Dispositif selon l'une quelconque des revendications 1 à 4, **caractérisé en ce que** l'ouverture (15) est ménagée dans une pièce de fermeture (14).

6. Dispositif selon la revendication 5, **caractérisé en ce que** l'ouverture (15) présente une couverture (16).

7. Dispositif selon l'une quelconque des revendications 1 à 6, **caractérisé en ce que** le disque intérieur (18) est monté dissociable d'un disque extérieur (21) formant une butée pour les ressorts hélicoïdaux (3, 4) intégrés.

8. Dispositif selon la revendication 7, **caractérisé en ce que** le diamètre extérieur du disque extérieur (21) est supérieur au diamètre (D) de l'ouverture centrale (15) dans la pièce de fermeture (14) du vérin à ressorts (1).

9. Dispositif selon l'une quelconque des revendications 1 à 8, **caractérisé en ce que** l'on peut régler une précontrainte au moins du ressort hélicoïdal (5) interchangeable.

10. Dispositif selon la revendication 9, **caractérisé en ce que** l'on prévoit une broche (17) disposée sur la tige de piston (8) du vérin à ressorts (1) pour régler la longueur (1) du ressort hélicoïdal (5) interchangeable correspondant à la précontrainte souhaitée.

11. Dispositif selon la revendication 10, **caractérisé en ce que** le disque intérieur (18) formant une butée pour le ressort hélicoïdal (5) est monté coulissant sur la broche (17).

12. Dispositif selon l'une quelconque des revendications 9 à 11, **caractérisé en ce que** l'on peut régler une précontrainte d'au moins un ressort hélicoïdal (3, 4) supplémentaire intégré.

13. Dispositif selon la revendication 12, **caractérisé en ce que** la longueur (L) correspondant à la précontrainte souhaitée du ressort hélicoïdal (3,4) intégré peut être réglée conjointement avec la longueur (1) correspondant à la précontrainte souhaitée du ressort hélicoïdal (5) interchangeable au moyen de la broche (17).

14. Dispositif selon l'une quelconque des revendications 1 à 13, **caractérisé en ce que** l'on prévoit une broche de montage ((25) pouvant être disposée sur la tige de piston (8) du vérin à ressorts (1) pour comprimer un ressort hélicoïdal (5a) interchangeable à introduire dans le vérin à ressorts (1) de longueur (1 + Δl) dépassant la longueur (1) correspondant à la précontrainte souhaitée.

15. Dispositif selon la revendication 14, **caractérisé en ce que** la broche de montage (25) peut être montée de manière coaxiale et en alignement précis sur la face frontale de la broche (17) opposée au vérin à ressorts (1).

16. Dispositif selon l'une quelconque des revendications 1 à 15, **caractérisé en ce que** l'on prévoit des dispositifs de centrage (18a, 21a, 23, 24) pour la disposition concentrique des ressorts hélicoïdaux (3, 4, 5) dans le vérin à ressorts (1).

17. Dispositif selon la revendication 16, **caractérisé en ce que** l'on prévoit un vérin de centrage (24) guidant de manière concentrique au moins le ressort hélicoïdal (5) interchangeable par rapport à un ressort hélicoïdal (4) intégré voisin.

18. Dispositif selon la revendication 16, **caractérisé en ce que** l'on prévoit un anneau de centrage (23) guidant de manière concentrique au moins un ressort hélicoïdal (4) intérieur par rapport à un ressort hélicoïdal extérieur (3) intégré.

19. Dispositif selon la revendication 16, **caractérisé en ce que** le disque intérieur (18) présente une saillie de centrage (18a) venant en prise dans le ressort hélicoïdal (5) interchangeable.

20. Dispositif selon la revendication 16, **caractérisé en ce que** le disque extérieur (21) présente un épaulement de centrage (21a) guidant de manière concentrique un ressort hélicoïdal (4) par rapport à un ressort hélicoïdal (3) intégré.

21. Robot, **caractérisé par** un dispositif selon les revendications 1 à 20.
